# FASCICULE DE BREVET EUROPEEN

(11) **EP 1 538 051 B1**
(45) Date de publication et mention de la délivrance du brevet: **11.11.2009**
(21) Numéro de dépôt: 03292989.5
(22) Date de dépôt: 01.12.2003
(51) Int. Cl.: B60T 13/74, F16D 65/14

(54) **Dispositif de commande de secours pour frein électromécanique de service**
Notbetätigungseinrichtung für eine elektromechanische Betriebsbremse
Emergency actuating device for an electromechanical service brake

(43) Date de publication de la demande: 08.06.2005
(73) Titulaire: Delphi Technologies, Inc., Troy, MI 48007 (US)
(72) Inventeur: Delayre, Xavier, 75012 Paris (FR); Loche, Jacques, 92600 Asnières (FR)
(74) Mandataire: Denton, Michael John

(56) Documents cités:
- EP-A- 1 138 971
- WO-A-03/050437
- US-A- 4 033 435
- US-A- 5 348 123

## Description

La présente invention concerne un dispositif de commande de secours pour frein électromécanique de service, notamment pour véhicule automobile.

L'invention est applicable notamment, mais non exclusivement, à un frein électromécanique de service à disque.

Les freins électromécaniques de service à disque sont maintenant bien connus. Comme les freins à disque à commande hydraulique, les freins électromécaniques à disque comportent un étrier de frein ayant deux plaquettes de frein placées respectivement de part et d'autre d'un disque de frein. Cependant, à la différence des freins à disque à commande hydraulique, les freins électromécaniques à disque comportent un moteur électrique rotatif, un mécanisme de réduction de vitesse et de conversion couplant un arbre dudit moteur électrique à au moins une desdites plaquettes de frein, ledit mécanisme étant apte à convertir le mouvement de rotation dudit arbre en un mouvement de translation desdites plaquettes de frein l'une vers ou à l'écart de l'autre selon le sens de rotation dudit arbre.

Comme les freins à disque à commande hydraulique, les freins électromécaniques à disque peuvent aussi être sujets à des défaillances de fonctionnement, en l'occurrence des pannes électriques dues par exemple à une panne de la batterie d'alimentation du véhicule dans lequel les freins sont installés, une défaillance des circuits électriques et électroniques de commande des moteurs électriques des freins, un défaut de connexion ou une coupure des fils d'alimentation du moteur d'un ou plusieurs des freins du véhicule, ou d'autres défauts similaires. Il est donc hautement souhaitable que, en cas de panne électrique, les freins électromécaniques de service à disque puissent être actionnés en cas de besoin, y compris lorsque le véhicule comportant de tels freins électromécaniques est en mouvement.

Le document EP 0 729 871 décrit un frein électromécanique de stationnement qui, dans une forme de réalisation, est un frein électromécanique de stationnement à disque combiné à un frein de service à disque à commande hydraulique. Les mâchoires du frein peuvent être serrées et desserrées au moyen d'un moteur électrique couplé à un dispositif de transmission, qui sont disposés dans ou sur l'étrier de frein. Un dispositif d'actionnement de secours, à commande manuelle, est prévu pour permettre un actionnement mécanique du frein de stationnement dans le cas d'une défaillance de l'actionnement électrique. Le dispositif d'actionnement de secours comporte un arbre flexible dont l'une des extrémités est reliée à l'arbre du moteur électrique et dont l'autre extrémité est reliée, directement ou indirectement, à l'un des deux arbres de sortie d'un différentiel. Une roue dentée conique reliée à une manivelle peut être mise en prise avec une couronne dentée du différentiel pour entraîner manuellement en rotation l'arbre flexible et, par suite, l'arbre du moteur électrique, donc le frein de stationnement, en faisant basculer la manivelle d'une position de repos à une position active autour d'un axe perpendiculaire à l'axe de rotation de la roue dentée conique et en faisant ensuite tourner la manivelle autour dudit axe de rotation.

Le dispositif d'actionnement de secours décrit dans le document EP 0 729 871 convient peut-être pour un frein électromécanique de stationnement, mais il ne convient pas pour un frein électromécanique de service. En effet, lorsqu'un conducteur constate que les freins de service de son véhicule ne fonctionnent plus, il faut néanmoins qu'il puisse arrêter rapidement son véhicule, par exemple en rétrogradant les rapports de la boîte de vitesses et/ou en actionnant le frein de stationnement à main. Or, si le dispositif d'actionnement de secours décrit dans le document EP 0 729 871 était appliqué à un frein électromécanique de service, il serait trop lent et ne permettrait pas un serrage rapide du frein. En effet, il faudrait d'abord faire basculer la manivelle de sa position de repos à sa position de travail et ensuite la faire tourner d'un grand nombre de tours sans se tromper de sens de rotation. Un grand nombre de tours de manivelle est en effet nécessaire avant de pouvoir obtenir un serrage efficace des freins, à cause de la présence de la roue dentée conique et de la couronne dentée du différentiel, qui forment un mécanisme démultiplicateur, donc réducteur de vitesse.

Le document US 5 348123 A décrit un dispositif de commande de secours d'après le préambule de la revendication 1. Par ailleurs, certaines techniques de conduite, en particulier sur la neige, font appel à l'utilisation du frein de stationnement quand le véhicule est en mouvement. Là encore, les freins doivent pouvoir être serrés et desserrés rapidement.

Un but de la présente invention est donc de fournir un dispositif de commande de secours pour frein électromécanique de service, permettant d'actionner manuellement et rapidement le frein électromécanique de service auquel le dispositif de commande de secours est associé, y compris lorsque le véhicule est en mouvement, et permettant aussi d'utiliser le frein de service comme frein de stationnement.

A cet effet, l'invention a pour objet un dispositif de commande de secours, actionnable manuellement, pour frein électromécanique de service, caractérisé en ce qu'il comprend un mécanisme multiplicateur de vitesse ayant un arbre d'entrée et un arbre de sortie, un bras de commande ayant une première extrémité liée rigidement à l'arbre d'entrée et une seconde extrémité apte à être reliée par un élément de transmission de force à un organe de manoeuvre, et un élément de crabotage fixé à l'arbre de sortie et apte à être mis en prise avec un élément complémentaire de crabotage fixé à une extrémité d'un arbre d'un moteur électrique du frein électromécanique de service par un mouvement de rotation du bras de commande autour de l'axe longitudinal de l'arbre d'entrée.

Grâce à un tel agencement, un freinage efficace des roues d'un véhicule peut être rapidement obtenu avec un frein électromécanique de service simplement en faisant pivoter d'un angle relativement faible, par exemple compris entre 30° et 50°, le bras de commande du dispositif de commande de secours, et cela dans un seul mouvement dudit bras de commande. Un tel angle de pivotement du bras de commande peut être facilement obtenu en reliant par exemple le bras de commande par un câble de transmission de force tel qu'un câble Bowden, à un levier conventionnel de frein de stationnement à main ou à un tirette conventionnelle de frein à main.

Dans un mode de réalisation avantageux de l'invention, le mécanisme multiplicateur de vitesse est un engrenage épicycloïdal.

De préférence, l'arbre d'entrée est creux, l'arbre de sortie est monté à rotation dans l'arbre d'entrée creux sans possibilité de déplacement axial par rapport à celui-ci, de telle sorte que les arbres d'entrée et de sortie soient mobiles axialement ensemble, et un élément à ressort est prévu pour solliciter les arbres d'entrée et de sortie dans une direction axiale apte à provoquer la mise en prise des deux éléments de crabotage.

Dans ce cas, un moyen d'appui axial est prévu sur un des deux éléments du groupe comprenant le bras de commande et un élément fixe entourant coaxialement l'arbre d'entrée, et une piste circulaire comportant une partie haute et une partie basse reliées par au moins une rampe est formée sur l'autre élément dudit groupe, de telle façon que lorsque le bras de commande est dans une position de repos le moyen d'appui axial est en contact avec la partie haute de la piste circulaire et l'élément de crabotage fixé à l'arbre de sortie est dans une première position axiale correspondant à un état débrayé de l'élément de crabotage, et lorsque le bras de commande est déplacé vers des positions de travail espacées angulairement de la position de repos, le moyen d'appui axial franchit la rampe et vient en contact avec la partie basse de la piste circulaire et l'élément de crabotage vient dans une seconde position axiale correspondant à un état embrayé dudit élément de crabotage.

Dans une forme de réalisation de l'invention, le mécanisme multiplicateur de vitesse et l'élément de crabotage sont logés dans le corps d'un frein électromécanique, l'arbre d'entrée a une extrémité qui fait saillie à l'extérieur dudit corps et le bras de commande est fixé à l'extrémité saillante de l'arbre d'entrée.

Dans une autre forme de réalisation, le mécanisme multiplicateur de vitesse et l'élément de crabotage sont montés dans un carter auxiliaire en forme de cuvette, destiné à être adjoint et fixé au corps d'un frein électromécanique, l'arbre d'entrée fait saillie à l'extérieur du carter auxiliaire à travers un orifice central dudit carter auxiliaire, et le bras de commande est fixé à l'arbre d'entrée du côté extérieur dudit carter auxiliaire.

L'invention a également pour objet un frein électromécanique de service, en particulier un frein électromécanique de service à disque, comportant un dispositif de commande de secours présentant les caractéristiques sus-indiquées.

D'autres objets, caractéristiques et avantages de l'invention ressortiront au cours de la description suivante de deux formes de réalisation de l'invention données à titre d'exemples en référence aux dessins annexés, sur lesquels :
- la figure 1 est une vue en coupe d'un frein électromécanique de service à disque comportant un dispositif de commande de secours selon une première forme de réalisation de l'invention ;
- la figure 2 est une vue partielle suivant la flèche F de la figure 1 montrant un bras de commande du dispositif de commande de secours selon l'invention et un organe de manoeuvre relié au bras de commande, ce dernier étant dans une position de repos ;
- la figure 3 est une vue en coupe suivant la ligne III-III de la figure 2, à plus grande échelle ;
- la figure 4 est une vue en coupe du dispositif de commande de secours dans un état embrayé ;
- la figure 5 est une vue semblable à la figure 2, montrant le bras de commande dans une position de travail correspondant à un état serré du frein électromécanique ;
- la figure 6 est une vue en coupe suivant la ligne VI-VI de la figure 5, à plus grande échelle ;
- la figure 7 est une vue en coupe semblable à celle de la figure 1, montrant une autre forme de réalisation de l'invention.

Dans la description qui va suivre, l'invention va être décrite à propos d'un frein électromécanique de service à disque pour véhicule automobile. Cependant, l'invention n'est nullement limitée à ce domaine technique particulier, car elle pourrait tout aussi bien être appliquée à des freins électromécaniques de service à tambour. En outre, le domaine technique auquel s'applique l'invention n'est pas seulement limité aux véhicules automobiles, car l'invention est applicable dans tous les cas où un frein électromécanique est utilisé pour freiner ou arrêter un élément ayant un mouvement relatif par rapport à un autre élément, ledit mouvement relatif n'étant pas nécessairement un mouvement de rotation, mais pouvant être aussi un mouvement de translation.

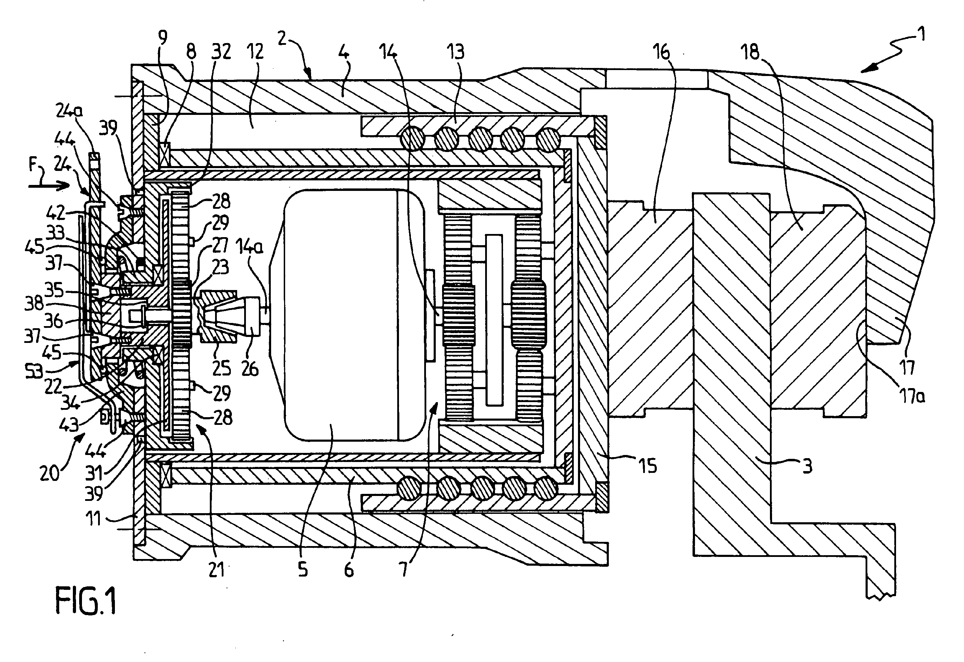

Le frein électromécanique de service 1 représenté sur la figure 1 comporte un étrier 2 placé à cheval sur un disque de frein 3 lié à une roue (non montrée) d'un véhicule. La partie droite de la figure 1 correspond au côté de l'étrier 2 placé en regard de la roue. Par convention, on désignera ce côté de la figure 1 comme le côté roue par opposition au côté carrosserie correspondant à la partie gauche de la figure 1.

L'étrier 2 comporte un boîtier ou corps 4 à l'intérieur duquel est logé un moteur électrique 5 qui, lorsqu'il est alimenté en courant, entraîne en rotation une vis à billes 6 par l'intermédiaire d'un mécanisme démultiplicateur 7 (réducteur de vitesse) constitué ici par un double engrenage épicycloïdal. La vis à billes 6 prend axialement appui, par l'intermédiaire d'une butée axiale 8 à billes ou à rouleaux, contre une plaque de fond 9, elle-même en appui contre un couvercle 11 fermant, côté carrosserie, la cavité 12 du boîtier 4 contenant les éléments 5 à 9 précités et encore d'autres éléments du frein 1 restant à décrire. Bien que la plaque de fond 9 et le couvercle 11 soient représentés sous forme d'éléments séparés, ils pourraient être réalisés d'une seule pièce.

Quand elle est entraînée en rotation, la vis à billes 6 déplace en translation un écrou 13 qui peut coulisser dans la cavité 12 du boîtier 4 dans une direction parallèle à l'axe de rotation de la vis à billes 6, elle-même coaxiale à l'arbre 14 du moteur électrique 5. L'écrou 13 est lié à une plaque de poussée 15 à laquelle est fixée une plaquette de frein 16 disposée d'un côté du disque de frein 3. Le boîtier 4 comporte, côté roue, une griffe 17, qui est faite d'une seule pièce avec le boîtier 4 et qui a une surface interne 17a contre laquelle est fixée une autre plaquette de frein 18 disposée en regard de l'autre côté du disque de frein 3 par rapport à la plaquette de frein 16.

Le mécanisme démultiplicateur 7 permet d'obtenir un rapport élevé entre la vitesse de rotation de l'arbre 14 du moteur électrique 5 et la vitesse de rotation de la vis à billes 6. Typiquement, en utilisant comme mécanisme démultiplicateur 7 un double engrenage épicycloïdal comme celui montré dans la figure 1, on peut obtenir par exemple un rapport de 30 pour 1. C'est-à-dire que pour une rotation d'un angle donné de l'arbre 14 du moteur électrique 5, la vis à billes 6 tournera d'un angle 30 fois plus faible. En revanche, l'intensité du couple disponible sur la vis à billes 6 est 30 fois plus importante que l'intensité du couple disponible sur l'arbre 14.

Les freins électromécaniques de service à disque comme le frein 1 décrit ci-dessus sont bien connus. Il n'est donc pas jugé utile de décrire plus en détail le fonctionnement du frein 1 lorsqu'il est actionné électriquement dans la mesure où cela n'est pas nécessaire à la compréhension de la présente invention.

Le frein 1 représenté sur la figure 1 comprend en outre un dispositif de commande de secours désigné d'une manière générale par la référence 20. Le dispositif de commande de secours 20 permet d'actionner mécaniquement le frein 1 en cas de panne électrique.

Le dispositif de commande de secours 20 représenté sur la figure 1 comprend essentiellement un mécanisme multiplicateur de vitesse 21 ayant un arbre d'entrée 22 et un arbre de sortie 23, un bras de commande 24 dont une extrémité est fixée rigidement à l'arbre d'entrée 22, et un élément de crabotage 25 qui est solidaire en rotation de l'arbre de sortie 23 et peut être mis en prise avec un élément complémentaire de crabotage 26 fixé à une extrémité 14a de l'arbre 14 du moteur électrique 5, du côté opposé de celui-ci par rapport au mécanisme démultiplicateur 7 du frein 1.

De préférence, le mécanisme multiplicateur de vitesse 21 du dispositif de commande de secours 20 est constitué par un engrenage épicycloïdal. La roue solaire 27 de l'engrenage épicycloïdal 21 est solidaire en rotation de l'arbre de sortie 23 et en prise avec des satellites 28 de l'engrenage épicycloïdal. Les satellites 28 sont montés fous sur des axes 29 fixés à un disque porte-satellites 31 qui est solidaire en rotation de l'arbre d'entrée 22. Les satellites 28 de l'engrenage épicycloïdal sont en prise avec une couronne 32 à denture intérieure qui est fixe, c'est-à-dire qui ne peut pas tourner par rapport au boîtier 4 de l'étrier de frein 2, mais qui peut être déplacée axialement dans une mesure limitée par rapport au couvercle 11 du boîtier 4 comme cela sera décrit plus loin. La couronne dentée 32 comporte un moyeu central 33 dans lequel l'arbre d'entrée 22 est monté à rotation par l'intermédiaire d'un palier 34 formant à la fois palier de roulement et butée axiale.

Le porte-satellites 31 est de préférence formé d'un seul tenant avec l'arbre d'entrée 22. L'arbre d'entrée 22 est de préférence réalisé sous forme d'un arbre creux, dont l'alésage central présente un épaulement annulaire 35 tourné vers le bras de commande 24. L'arbre de sortie 23, l'élément de crabotage 25 et la roue solaire 27 sont de préférence formés d'un seul tenant, mais ils pourraient aussi être constitués par des pièces séparées fixées rigidement les unes aux autres par des moyens appropriés. L'arbre de sortie 23 est monté à rotation dans l'arbre d'entrée creux 22 sans possibilité de déplacement axial par rapport à celui-ci. A cet effet, un circlip 36 peut être par exemple fixé dans une gorge circulaire formée dans l'arbre de sortie 23 et coopère avec l'épaulement 35 de telle façon que les deux arbres puissent être déplacés axialement ensemble dans les deux sens. On notera que, dans la pratique, l'épaulement annulaire 35 peut être formé par un roulement à billes ou à rouleaux.

Le bras de commande 24 est fixé à l'arbre d'entrée 22 par exemple au moyen de deux vis 37, avec interposition d'une plaque entretoise 38 de forme circulaire. La plaque entretoise 38 a un diamètre extérieur sensiblement égal à celui du moyeu 33 et elle est en contact glissant avec la face d'extrémité dudit moyeu 33. Dans ces conditions, la couronne dentée 32 est calée axialement entre la plaque entretoise 38 et le porte-satellites 31. Ainsi, tout déplacement axial du bras de commande 24 se traduira par un déplacement axial correspondant de l'ensemble du mécanisme multiplicateur de vitesse 21 et pourra être mis à profit pour mettre en prise l'élément femelle de crabotage 25 avec l'élément mâle de crabotage 26. Au lieu d'être constitués par deux pièces séparées, le bras de commande 24 et la plaque entretoise 38 pourraient être formés d'un seul tenant.

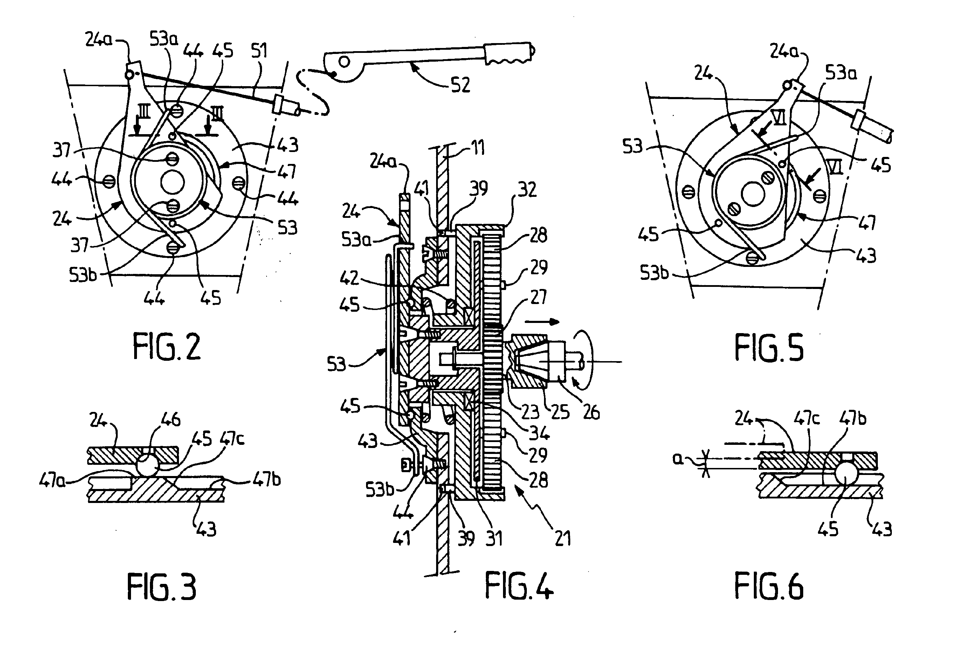

Plusieurs pions 39 sont fixés à la face de la couronne dentée 32 qui est tournée vers le couvercle 11 du boîtier 4 et sont engagés dans des trous correspondants 41 (figure 4) dudit couvercle 11 afin d'empêcher la roue dentée 32 de tourner par rapport au couvercle 11. Toutefois, les pions 39 peuvent coulisser dans les trous 41 pour permettre un petit déplacement axial de la couronne dentée 32.

Un élément à ressort 42, par exemple un ressort hélicoïdal, est disposé autour du moyeu 33 de la couronne dentée 32 et prend appui axialement d'un côté sur ladite couronne dentée et de l'autre côté sur un élément fixe 43 qui entoure coaxialement la plaque entretoise 38 liée à l'arbre d'entrée 22. Dans ces conditions, le ressort hélicoïdal 42 sollicite axialement la couronne dentée 32, donc l'ensemble du mécanisme multiplicateur de vitesse 21 et, par conséquent, les deux arbres 22 et 23 dans une direction axiale apte à provoquer la mise en prise des deux éléments de crabotage 25 et 26. L'élément 43 est fixé au couvercle 11 du boîtier 4 par plusieurs vis, par exemple quatre vis 44 (figure 2).

Dans le dispositif de commande de secours 20, un moyen d'appui axial est prévu sur le bras de commande 24 ou sur l'élément fixe 43. Par exemple, le moyen d'appui peut être constitué par au moins une bille 45, de préférence deux billes 45 (figures 1 et 2) ou plus qui sont logées dans des évidements correspondants 46, partiellement sphériques, formés dans la face du bras de commande 24 qui est tournée vers l'élément fixe 43. Dans ce cas, les billes 45 prennent appui, sous l'action du ressort 42, contre l'élément fixe 43 servant de contre-appui, et elles peuvent rouler sur une piste circulaire 47 (figure 2) formée sur ledit élément fixe 43, concentriquement à l'axe de l'arbre d'entrée 22. La piste circulaire 47 comporte au moins une partie haute 47a et au moins une partie basse 47b (deux parties hautes et deux parties basses lorsqu'il y a deux billes 45), qui sont reliées entre elles par une rampe 47c (figure 3).

Les deux parties hautes 47a sont formées sur la piste circulaire 47 dans des positions telles que, quand le bras de commande 24 se trouve dans une position de repos (figure 2), les deux billes 45 sont respectivement en appui sur les parties hautes correspondantes 47a de la piste 47. Dans ces conditions, le bras de commande est écarté de l'élément fixe 43 et l'élément femelle de crabotage 25, qui est relié à l'arbre de sortie 23, lui-même lié axialement au bras de commande 24 par l'intermédiaire du circlip 36, de l'épaulement annulaire 35 de l'arbre d'entrée 22, de la plaque entretoise 38 et des vis 37, est dans un état débrayé par rapport à l'élément mâle de crabotage 26.

Lorsqu'on fait tourner le bras de commande 24 dans le sens horaire (vu dans les figures 2 et 5) depuis la position de repos montrée dans la figure 2 vers la position de travail montrée dans la figure 5, les billes 45 franchissent tout d'abord les rampes 47c de la piste circulaire 47 pour venir rouler sur la partie basse 47b de ladite piste (figure 6). Il en résulte que, tout en pivotant autour de l'axe de l'arbre d'entrée 22, le bras de commande 24 se déplace axialement d'une distance a (figure 6) correspondant à la différence de hauteur entre les parties haute et basse 47a et 47b de la piste circulaire 47, et que l'élément femelle de crabotage 25 qui est relié comme indiqué plus haut au bras de commande 24 vient en prise avec l'élément mâle de crabotage 26 afin d'entraîner celui-ci en rotation (figure 4). Le déplacement axial a (figure 6) du bras de commande 24 et, par suite, de l'élément femelle de crabotage 25, peut être par exemple de l'ordre de 0,5 mm à 1 mm.

Grâce à la présence du mécanisme multiplicateur de vitesse 21, l'amplitude du mouvement de pivotement du bras de commande 24 est amplifiée et convertie en un mouvement de rotation de plusieurs tours de l'arbre de sortie 23. Le coefficient de multiplication du mécanisme 21 peut être compris entre environ 10 et 20. Dans le cas où ce coefficient est par exemple égal à 16, un déplacement angulaire de 45° du bras de commande 24 va provoquer une rotation de deux tours de l'arbre de sortie 23 du mécanisme multiplicateur 21, donc aussi une rotation de deux tours de l'arbre 14 du moteur électrique 5, ce qui est généralement suffisant pour provoquer le serrage des plaquettes de frein 16 et 18 contre les faces opposées du disque de frein 3.

Pour permettre l'actionnement du bras de commande 24, l'extrémité 24a de celui-ci est reliée par un élément de transmission de force 51, par exemple un câble Bowden, à un organe de manoeuvre 52 comme montré dans la figure 2. L'organe de manoeuvre 52 peut être par exemple un levier classique de frein de stationnement ou frein à main disposé dans l'habitacle du véhicule entre les deux sièges avant de celui-ci. A titre de variante, l'organe de manoeuvre 52 pourrait être une tirette de frein à main.

Comme montré dans les figures 1, 2, 4 et 5, un élément à ressort 53 est prévu pour ramener le bras de commande 24 de la position de travail montrée dans la figure 5 à la position de repos montrée dans la figure 2. L'élément à ressort 53 peut être par exemple un ressort spirale comportant une branche 53a en appui sur un côté du bras de commande 24 et une autre branche 53b en appui sur une des vis 44, qui présente à cet effet une tête saillante par rapport à l'élément fixe 43 comme montré dans les figures 1 et 4. La position de repos du bras de commande 24 peut être par exemple définie par une butée (non montrée) solidaire du bras de commande et par une contre-butée (non montrée) solidaire de l'élément fixe 43.

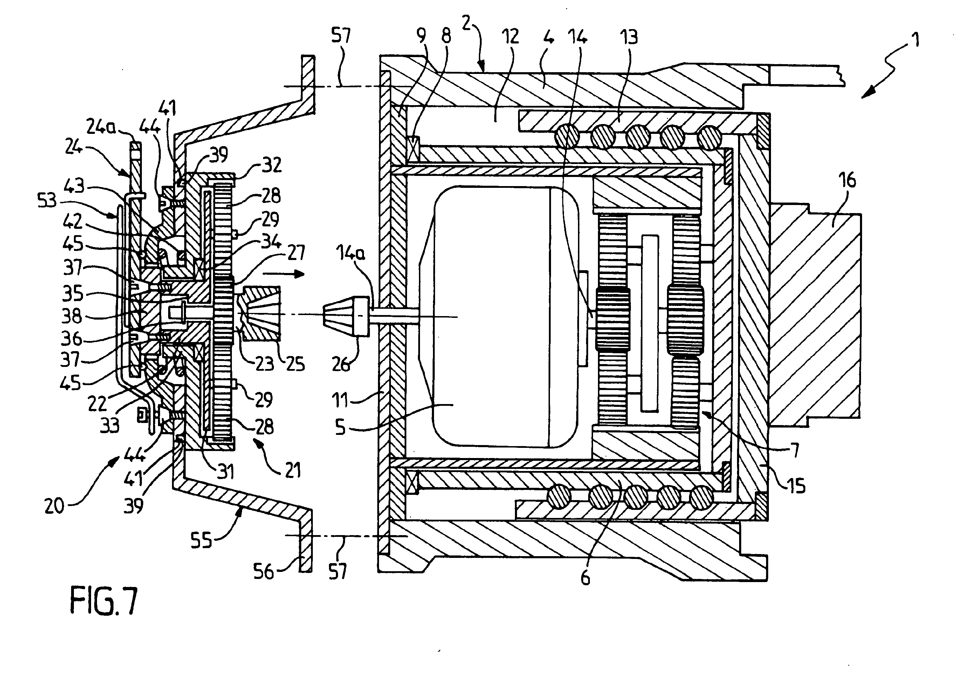

En se reportant maintenant à la figure 7, on peut voir un second mode de réalisation de l'invention, dans lequel les éléments qui sont identiques ou qui jouent le même rôle que ceux du mode de réalisation décrit plus haut sont désignés par les mêmes numéros de référence et ne seront pas décrits à nouveau en détail. Dans le mode de réalisation des figures 1 à 6, le dispositif de commande de secours 20 est intégré dans le boîtier 4 de l'étrier 2 du frein de service 1. Le mode de réalisation de la figure 7 diffère essentiellement du mode de réalisation de la figure 1 en ce que le dispositif de commande de secours 20 est réalisé sous la forme d'un module séparé, qui peut être rapporté et fixé au boîtier 4 de l'étrier 2 du frein 1. Dans ce cas, l'extrémité 14a de l'arbre 14 du moteur électrique 5 passe dans des ouvertures alignées formées dans la plaque de fond 9 et le couvercle 11 du boîtier 4 et fait saillie à l'extérieur du couvercle 11. L'organe mâle de crabotage 26 se trouve du côté extérieur du couvercle 11. D'un autre côté, le mécanisme multiplicateur de vitesse 21 et l'élément femelle de crabotage 25 sont montés dans un carter auxiliaire 55. Le carter 55 a la forme d'une cuvette munie d'une bride annulaire 56 par laquelle le carter 55 peut être fixé au boîtier 4 de l'étrier 2 par exemple par des vis 57 représentées de manière schématique par des axes en traits mixtes. Les pions 39 de la couronne dentée 32 sont ici engagés dans des trous 41 formés dans la paroi de fond de la cuvette 55. L'élément 43 est fixé par les vis 44 à la paroi de fond de la cuvette 55, du côté extérieur de celle-ci. Pour le reste, le dispositif de commande de secours 20 est identique à celui du mode de réalisation de la figure 1.

Il va de soi que les modes de réalisation de l'invention qui ont été décrits ci-dessus ont été donnés à titre d'exemples purement indicatifs et nullement limitatifs, et que de nombreuses modifications peuvent être apportées par l'homme de l'art sans pour autant sortir du cadre de l'invention d'après les revendications ci-dessous.

C'est ainsi par exemple que l'organe femelle de crabotage 25 pourrait être solidaire de l'extrémité 14a de l'arbre du moteur électrique 5, tandis que l'organe mâle de crabotage 26 pourrait être solidaire de l'arbre de sortie 23 du mécanisme multiplicateur de vitesse 21. De manière similaire, les positions relatives des billes 45 et de la piste 47 pourraient être interverties, c'est-à-dire que la piste 47 pourrait être formée sur la face du bras de commande tournée vers l'élément fixe 43 et les billes 45 pourraient être logées dans des évidements formés dans l'élément fixe 43.

En outre, comme indiqué plus haut, l'invention est également applicable à un frein de service à tambour. Dans ce cas, le dispositif de commande de secours est intégré au corps du frein à tambour ou réalisé sous la forme d'un module séparé pouvant être rapporté et fixé au corps du frein à tambour. Naturellement, dans ce cas, le coefficient de multiplication du mécanisme multiplicateur de vitesse 21 pourra avoir des valeurs différentes de celles indiquées plus haut, afin d'être adapté au rapport de transmission du mécanisme de transmission entraîné par le moteur électrique du frein à tambour, de façon à obtenir un serrage efficace du tambour pour un angle de pivotement relativement faible du bras de commande 24.

## Revendications

1. Dispositif de commande de secours (20), actionnable manuellement, pour frein électromécanique de service (1), **caractérisé en ce qu'**il comprend un mécanisme multiplicateur de vitesse (21) ayant un arbre d'entrée (22) et un arbre de sortie (23), un bras de commande (24) ayant une première extrémité liée rigidement à l'arbre d'entrée (22) et une seconde extrémité (24a) apte à être reliée par un élément de transmission de force (51) à un organe de manoeuvre (52), et un élément de crabotage (25) fixé à l'arbre de sortie (23) et apte à être mis en prise avec un élément complémentaire de crabotage (26) fixé à une extrémité (14a) d'un arbre (14) d'un moteur électrique (5) du frein électromécanique de service (1) par un mouvement de rotation du bras de commande (24) autour de l'axe longitudinal de l'arbre d'entrée (22).

2. Dispositif de commande de secours selon la revendication 1, **caractérisé en ce que** le mécanisme multiplicateur de vitesse (21) est un engrenage épicycloïdal (27-32).

3. Dispositif de commande de secours selon la revendication 1 ou 2, **caractérisé en ce que** l'arbre d'entrée (22) est creux, l'arbre de sortie (23) est monté à rotation dans l'arbre d'entrée creux sans possibilité de déplacement axial par rapport à celui-ci, de telle sorte que les arbres d'entrée et de sortie (22, 23) soient mobiles axialement ensemble, et un élément à ressort (42) est prévu pour solliciter les arbres d'entrée et de sortie (22, 23) dans une direction axiale apte à provoquer la mise en prise des deux éléments de crabotage (25, 26).

4. Dispositif de commande de secours selon la revendication 3, **caractérisé en ce qu'**un moyen d'appui axial (45) est prévu sur un des deux éléments du groupe comprenant le bras de commande (24) et un élément fixe (43) entourant coaxialement l'arbre d'entrée (22), et une piste circulaire (47) comportant une partie haute (47a) et une partie basse (47b) reliées par au moins une rampe (47c) est formée sur l'autre élément dudit groupe, de telle façon que lorsque le bras de commande (24) est dans une position de repos le moyen d'appui axial (45) est en contact avec la partie haute (47a) de la piste circulaire (47) et l'élément de crabotage (25) fixé à l'arbre de sortie (23) est dans une première position axiale correspondant à un état débrayé de l'élément de crabotage (25), et lorsque le bras de commande (24) est déplacé vers des positions de travail espacées angulairement de la position de repos, le moyen d'appui axial (45) franchit la rampe (47c) et vient en contact avec la partie basse (47b) de la piste circulaire (47) et l'élément de crabotage (25) vient dans une seconde position axiale correspondant à un état embrayé dudit élément de crabotage (25).

5. Frein électromécanique de service, **caractérisé en ce qu'**il comprend un dispositif de commande de secours (20) selon l'une quelconque des revendications 1 à 4.

6. Frein électromécanique de service selon la revendication 5, **caractérisé en ce que** le mécanisme multiplicateur de vitesse (21) et l'élément de crabotage (25) sont logés dans le corps (4) du frein électromécanique (1), l'arbre d'entrée (22) a une extrémité qui fait saillie à l'extérieur dudit corps (4) et le bras de commande (24) est fixé à l'extrémité saillante de l'arbre d'entrée (22).

7. Frein électromécanique de service selon la revendication 5, **caractérisé en ce que** le mécanisme multiplicateur de vitesse (21) et l'élément de crabotage (25) sont montés dans un carter auxiliaire (55) en forme de cuvette, destiné à être adjoint et fixé au corps (4) du frein électromécanique (1), l'arbre d'entrée (22) fait saillie à l'extérieur du carter auxiliaire (55) à travers un orifice central dudit carter auxiliaire, et le bras de commande (24) est fixé à l'arbre d'entrée (22) du côté extérieur dudit carter auxiliaire (55).

8. Frein électromécanique de service selon la revendication 6 ou 7, **caractérisé en ce que** ledit corps (4) est un étrier (2) de frein à disque (1).

## Claims

1. Emergency control device (20), manually operable, for electromechanical service brake (1), **characterised by** the fact that it comprises a speed multiplier mechanism (21) having an input shaft (22) and an output shaft (23), a control arm (24) having a first end rigidly connected to the input shaft (22) and a second end (24a) able to be connected by a force transmission element (51) to an operating organ (52), and a sprag clutch element (25) fixed to the output shaft (23) and able to be engaged with a complementary sprag clutch element (26) fixed to one end (14a) of a shaft (14) of an electric motor (5) of the electromechanical service brake (1) by a rotary movement of the control arm (24) about the longitudinal axis of the input shaft (22).

2. Emergency control device as described in claim 1, **characterised by** the fact that the speed multiplier mechanism (21) is an epicycloidal gearing (27-32).

3. Emergency control device as described in claim 1 or 2, **characterised by** the fact that the input shaft (22) is hollow, the output shaft (23) is mounted rotatably in the hollow input shaft without the possibility of axial displacement relative to it, so that the input and output shafts (22, 23) are axially moveable together, and a spring element (42) is provided to bias the input and output shafts (22, 23) in an axial direction able to cause engagement of the two sprag clutch elements (25, 26).

4. Emergency control device as described in claim 3, **characterised by** the fact that an axial bearing means (45) is provided on one of the two elements of the group comprising the control arm (24) and a fixed element (43) co-axially surrounding the input shaft (22), and a circular track (47) having an upper part (47a) and a lower part (47b) connected by at least one ramp (47c) is formed on the other element of the said group, in such a manner that when the control arm (24) is in a rest position the axial bearing means (45) is in contact with the upper part (47a) of the circular track (47) and the sprag clutch element (25) fixed to the output shaft (23) is in a first axial position corresponding to a disengaged state of the sprag clutch element (25), and when the control arm (24) is displaced into working positions angularly distant from the rest position, the axial bearing means (45) crosses the ramp (47c) and comes into contact with the lower part (47b) of the circular track (47) and the sprag clutch element (25) comes into a second axial position corresponding to an engaged state of the said sprag clutch element (25).

5. Electromechanical service brake, **characterised by** the fact that it includes an emergency control device (20) as described in any one of claims 1 to 4.

6. Electromechanical service brake as described in claim 5, **characterised by** the fact that the speed multiplier mechanism (21) and the sprag clutch element (25) are housed in the body (4) of the electromechanical brake (1), the input shaft (22) has an end which projects outside the said body (4) and the control arm (24) is fixed to the projecting end of the input shaft (22).

7. Electromechanical service brake as described in claim 5, **characterised by** the fact that the speed multiplier mechanism (21) and the sprag clutch element (25) are mounted in an auxiliary bowl-shaped casing (55), intended to be attached and fixed to the body (4) of the electromechanical brake (1), the input shaft (22) projects outside the auxiliary casing (55) through a central orifice in the said auxiliary casing, and the control arm (24) is fixed to the input shaft (22) on the outer side of the said auxiliary casing (55).

8. Electromechanical service brake as described in claim 6 or 7, **characterised by** the fact that the said body (4) is a caliper (2) of a disc brake (1).

## Patentansprüche

1. Manuell betätigbare Notbetätigungsvorrichtung (20) für eine elektromechanische Betriebsbremse (1), **dadurch gekennzeichnet, dass** sie einen Geschwindigkeitsübersetzungsmechanismus (21) mit einer Eingangswelle (22) und einer Ausgangswelle (23), einen Betätigungsarm (24) mit einem ersten Ende, das mit der Eingangswelle (22) starr verbunden ist, und einem zweiten Ende (24a), das in der Lage ist, durch ein Kraftübertragungselement (51) mit einem Betätigungsorgan (52) verbunden zu werden, und ein Klauenkupplungselement (25) umfasst, das an der Ausgangswelle (23) befestigt ist und in der Lage ist, mit einem ergänzenden Klauenkupplungselement (26), das an einem Ende (14a) einer Welle (14) eines Elektromotors (5) der elektromechanischen Betriebsbremse (1) befestigt ist, durch eine Drehbewegung des Betätigungsarms (24) um die Längsachse der Eingangswelle (22) in Eingriff gebracht zu werden.

2. Notbetätigungsvorrichtung nach Anspruch 1, **dadurch gekennzeichnet, dass** der Geschwindigkeitsübersetzungsmechanismus (21) ein Planetengetriebe (27-32) ist.

3. Notbetätigungsvorrichtung nach Anspruch 1 oder 2, **dadurch gekennzeichnet, dass** die Eingangswelle (22) hohl ist, die Ausgangswelle (23) in der hohlen Eingangswelle ohne Möglichkeit der axialen Bewegung bezüglich dieser drehbar montiert ist, so dass die Eingangs- und Ausgangswellen (22, 23) zusammen axial beweglich sind, und ein Federelement (42) vorgesehen ist, um die Eingangs- und Ausgangswellen (22, 23) in einer axialen Richtung zu beaufschlagen, die in der Lage ist, das In-Eingriff-Bringen der beiden Klauenkupplungselemente (25, 26) zu bewirken.

4. Notbetätigungsvorrichtung nach Anspruch 3, **dadurch gekennzeichnet, dass** ein axiales Auflagemittel (45) auf einem der beiden Elemente der Gruppe vorgesehen ist, die den Betätigungsarm (24) und ein die Eingangswelle (22) koaxial umgebendes feststehendes Element (43) umfasst, und eine kreisförmige Bahn (47), die einen oberen Teil (47a) und einen unteren Teil (47b) umfasst, die durch mindestens eine Rampe (47c) verbunden sind, auf dem anderen Element dieser Gruppe gebildet ist, so dass, wenn der Betätigungsarm (24) in einer Ruhestellung ist, das axiale Auflagemittel (45) mit dem oberen Teil (47a) der kreisförmigen Bahn (47) in Kontakt ist und das an der Ausgangswelle (23) befestigte Klauenkupplungselement (25) in einer ersten axialen Stellung ist, die einem ausgekuppelten Zustand des Klauenkupplungselements (25) entspricht, und, wenn der Betätigungsarm (24) auf Arbeitsstellungen zu bewegt wird, die von der Ruhestellung winkelmäßig beabstandet sind, das axiale Auflagemittel (45) die Rampe (47c) passiert und mit dem unteren Teil (47b) der kreisförmigen Bahn (47) in Kontakt kommt und das Klauenkupplungselement (25) in eine zweite axiale Stellung gelangt, die einem eingekuppelten Zustand des Klauenkupplungselements (25) entspricht.

5. Elektromechanische Betriebsbremse, **dadurch gekennzeichnet, dass** sie eine Notbetätigungsvorrichtung (20) nach einem der Ansprüche 1 bis 4 umfasst.

6. Elektromechanische Betriebsbremse nach Anspruch 5, **dadurch gekennzeichnet, dass** der Geschwindigkeitsübersetzungsmechanismus (21) und das Klauenkupplungselement (25) in dem Körper (4) der elektromechanischen Bremse (1) untergebracht sind, die Eingangswelle (22) ein Ende aufweist, das aus dem Körper (4) nach außen vorsteht, und der Betätigungsarm (24) am vorstehenden Ende der Eingangswelle (22) befestigt ist.

7. Elektromechanische Betriebsbremse nach Anspruch 5, **dadurch gekennzeichnet, dass** der Geschwindigkeitsübersetzungsmechanismus (21) und das Klauenkupplungselement (25) in einem schalenförmigen Zusatzgehäuse (55) montiert sind, das dazu bestimmt ist, an den Körper (4) der elektromechanischen Bremse (1) angefügt und an diesem befestigt zu werden, die Eingangswelle (22) aus dem Zusatzgehäuse (55) durch eine zentrale Öffnung des Zusatzgehäuses nach außen vorsteht und der Betätigungsarm (24) an der Eingangswelle (22) auf der Außenseite des Zusatzgehäuses (55) befestigt ist.

8. Elektromechanische Betriebsbremse nach Anspruch 6 oder 7, **dadurch gekennzeichnet, dass** der Körper (4) ein Sattel (2) einer Scheibenbremse (1) ist.
